# EUROPEAN PATENT APPLICATION

(11) **EP 0 885 761 A1**
(43) Date of publication of application: **23.12.1998**
(21) Application number: 98201970.5
(22) Date of filing: 12.06.1998
(51) Int. Cl.: B60J 7/16

(54) **Open roof construction for a vehicle**

(30) Priority: 16.06.1997 NL 1006321
(71) Applicant: Inalfa Industries B.V., 5804 AB Venray (NL)
(72) Inventor: Nabuurs, Martinus Wilhelmus Maria, 5825 JT Overloon (NL); Sanders, Joseph Petrus Johannes, 5913 CG Venlo (NL)
(74) Representative: Metman, Karel Johannes

(57) **Abstract**

An open roof construction for a vehicle having an opening (2) in its fixed roof (1) comprises a frame (3) to be secured to the roof of the vehicle, and a movable panel (4) for selectively opening or closing the roof opening. Adjusting means (5; 17) are provided between the frame and the panel, which adjusting means comprise an operating element (6) for adjusting the panel. The adjusting means are adjustable within a normal adjusting range between at least a first position, which corresponds with an extreme open position of the panel, and a second position, which corresponds with the closed position of the panel. An unlocking mechanism (11; 31 - 38) between the panel and the adjusting means functions to unlock and remove the panel. The adjusting means (5; 17) comprise an unlocked position beyond the normal adjusting range, which is to be selected by the operating element, and the unlocking mechanism (11; 31 - 38) is constructed in such a manner that it can only be activated in the unlocked position of the adjusting means.

## Description

The present invention relates to an open roof construction for a vehicle having an opening in its fixed roof, which construction comprises a stationary part to be secured to the roof of the vehicle, a movable closing element for selectively opening or closing the roof opening, adjusting means provided between said stationary part and said closing element, which comprise an operating element for adjusting said closing element, wherein said adjusting means are adjustable within a normal adjusting range between at least a first position, which corresponds with an extreme open position of the closing element, and a second position, which corresponds with the closed position of the closing element, as well as an unlocking mechanism, which is preferably provided between said closing element and said adjusting means, for unlocking and removing the closing element.

A known version of such an open roof construction is in the form of a so-called sunroof or pop-up roof, wherein a glass panel can pivot obliquely upwards from its closed position to a ventilating position. By detaching the glass panel by means of the unlocking mechanism, it is possible to drive with the roof opening completely open.

The object of the present invention is to further improve an open roof construction of the type referred to in the introduction.

In order to accomplish that objective the open roof construction according to the invention is characterized in that said adjusting means comprise an unlocked position beyond the normal adjusting range, which is to be selected by the operating element, and that the unlocking mechanism is constructed in such a manner that it can only be activated in the unlocked position of the adjusting means.

Since the unlocking mechanism can only be activated in a position of the adjusting means for the closing element which lies beyond the normal adjusting range, the risk of accidental operation of the unlocking mechanism, for example while the vehicle is moving, has been eliminated, so that the unlocking mechanism is quite safe. Preferably, a special operation is required for moving the adjusting means to the unlocked position.

In a first embodiment the unlocking mechanism is provided with a manually operated unlocking element, which is incorporated in the adjusting means, and which can preferably not be operated until the adjusting means have been moved beyond the first position. In the case of a pop-up sunroof, the panel can be unlocked once the panel has been moved beyond the ventilating position, so that the panel can be taken hold of from outside and be lifted from the front hinges after being unlocked, after which it can be stored.

In a second embodiment of the open roof construction according to the invention, the unlocked position of the unlocking mechanism lies beyond the second (closed) position, and the panel is loaded in upward direction by a spring element in the closed position, in such a manner that the panel will automatically be pushed upwards after the unlocking mechanism has been unlocked.

The invention will be explained in more detail hereafter with reference to the drawings, which show embodiments of the open roof construction according to the invention.

Figs. 1 and 2 are longitudinal sectional views of a part of an open roof construction in the form of a pop-up roof, showing the closed position and the ventilating position respectively.

Fig. 3 is a sectional view corresponding with Fig. 1, with this difference that the panel and the adjusting means are shown in the unlocked position.

Fig. 4 is a sectional view corresponding with Fig. 3, wherein the unlocking mechanism is shown in the unlocked position, from which position the panel can be removed.

Fig. 5 is a partial longitudinal section of a second embodiment of an open roof construction according to the invention in the form of a pop-up roof, showing the ventilating position thereof.

Fig. 6 is a sectional view corresponding with Fig. 5, wherein the panel is shown in the closed position.

Fig. 7 is a sectional view corresponding with Fig. 6, wherein the unlocking mechanism is shown in the unlocked position.

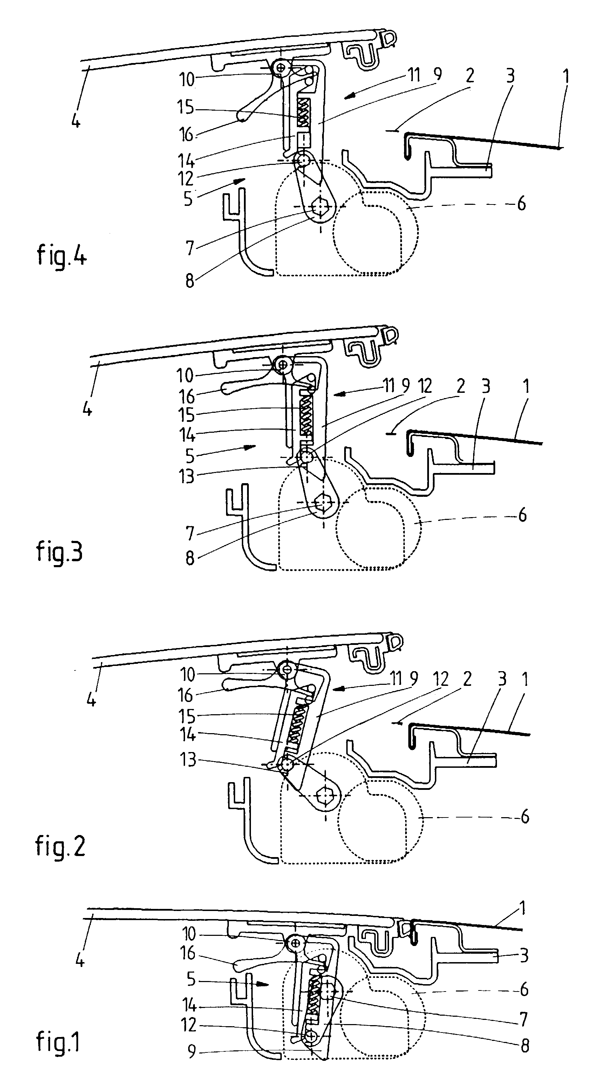

Figs. 1 - 4 show a first embodiment of the open roof construction according to the invention, which is intended for a vehicle, in particular a motor vehicle, such as a passenger car, which comprises a fixed roof 1, in which an opening 2 is recessed. The open roof construction comprises a stationary part, such as a frame 3, which is secured to the fixed roof 1 in some way or other. The stationary part movably supports a closing element 4, in this case in the form of a rigid and preferably more or less transparent panel, which is for example made of glass. Said panel 4 can be moved by adjusting means generally indicated at 5, between a closed position, in which it closes the roof opening 3 (Fig. 1), and a ventilating position, in which the panel has been moved obliquely upwards in rearward direction to a position in which it extends outside the roof opening (Fig. 2). An open roof construction wherein panel 4 is capable of movement in this manner is also known as a sunroof or a pop-up roof.

The illustrated embodiment of the open roof construction can be electrically operated, and to that end it is fitted with an electric motor 6 (illustrated in dotted lines), which is capable of rotationally driving a drive shaft 7. The adjusting means 5 are connected to said drive shaft 7, and in this case said adjusting means consist of a bell-crank lever comprising lever arms 8 and 9. The short lever arm 8 is mounted on drive shaft 7, so that it is capable of pivoting movement about drive shaft 7. Lever arm 9 is pivotally connected to lever arm 8 with one end, and it is connected to panel 4, via a hinge 10, with its opposite end.

Panel 4 can be detached from frame 3 by means of an unlocking mechanism 11 near its rear end, in this case at the location of a hinge 12 provided between lever arms 8 and 9. Unlocking mechanism 11 is incorporated in the lever arm 9 in the form of a hook 13 or the like being formed thereon, which is capable of engaging round hinge pin 12 of lever arm 8, whilst a slide 14 on lever arm 9 is capable of retaining hinge pin 12 completely within hook 13. Slide 14 is capable of reciprocating movement in longitudinal direction with respect to lever arm 9, and it is spring-loaded in the direction of the locked position by means of a spring 15. Slide 14 can be moved against the force of spring 15 by means of a finger-grip or hand-grip 16, which can pivot about hinge 10.

A comparison between Fig. 3 and Fig. 4 shows that in Fig. 4 grip 16 has been operated for unlocking the unlocking mechanism 11, and that in Fig. 4 slide 14 has been retracted so far that hinge pin 12 can move out of hook 13. Grip 16 thereby engages lever arm 9 in such a manner that further pivoting of grip 16 about hinge 10 will cause lever arm 9 to pivot about hinge 10 as well, so that unlocking of the unlocking mechanism 11 will automatically result in the lever arm 9 being detached from lever arm 8, thus making it easy to detach the panel. Once the panel 4 has been detached at the rear side, said panel, which is in its ventilating position, can readily be taken hold of from outside the vehicle and also be detached from its front hinges, which may be special hook hinges, which are known per se, however, and be stored.

It is noted that in Figs. 3 and 4 the adjusting means 5 are shown to take up a position beyond the normal ventilating position. In this ventilating position, and also in positions more towards the closed position, grip 16 has further pivoted back along with lever arm 9, as a result of which the end of grip 16 has moved to a position so close to the underside of the panel, that it can hardly be operated, if at all. That is why the adjusting means must first be moved to the unlocked position, via electric motor 6, by means of control elements, such as pushbuttons or the like, before panel 4 can be unlocked. This enhances the safety of the whole. The grip 16 may furthermore be covered until the ventilating position is reached by means of a cap or the like provided on panel 4. Grip 16 cannot be operated in the closed position, because in that position grip 16 is positioned just above a frame part which prevents grip 16 from pivoting downwards.

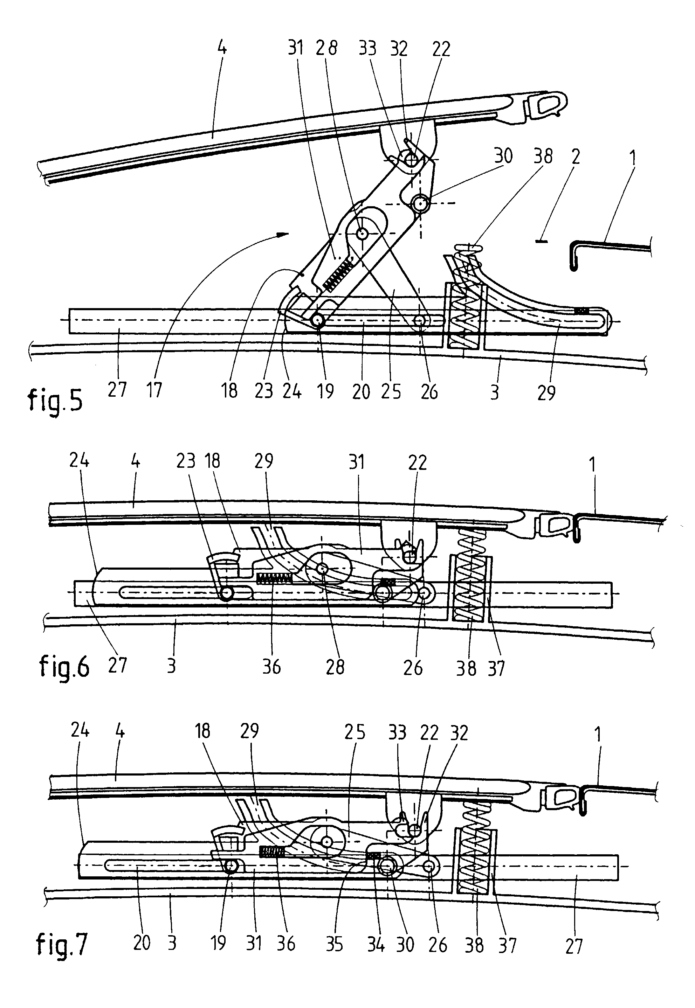

Figs. 5 - 7 show a second embodiment of the open roof construction according to the invention, likewise in the form of a sunroof or pop-up roof, with this difference, however, that panel 4 can be moved between the closed position (Fig. 6) and the ventilating position (Fig. 5) by adjusting means 17 of different construction. The adjusting means are provided with an extension lever 18, which is pivotally and movably accommodated on its lower side, by means of a hinge pin 19, in a slot 20 of a driving element 21 which is guided in a stationary guide 27, and at its opposite end lever 18 is detachably connected to a hinge pin 22 of panel 4. A blocking wall 23 on lever 18, which extends concentrically around the lower hinge pin 19, cooperates with a wall 24 in the form of a segment of a circle on the front side of driving element 21, in order to prevent extension lever 18 from moving with respect to driving element 21 in upwardly pivoted positions.

The adjusting means 17 furthermore comprise an auxiliary lever 25, which is pivotally connected to the stationary guide 27 at its lower end by means of a hinge pin 26, and which pivotally engages lever 18, approximately in the centre thereof, at its upper end by means of a hinge pin 28. Driving element 21, forming part of the adjusting means 17, is provided with a locking slot 29, which is capable of cooperation with a pin 30 near the upper end of extension lever 18, for the purpose of guiding and locking extension lever 18 in its lowermost position near its closed position and in its closed position respectively.

Hinge pin 22 of panel 4 is detachably connected to extension lever 18 for the purpose of unlocking panel 4 from frame 3, thus making it possible to remove panel 4.

To this end the extension lever 18 is provided with a slide 31, which can slide over a limited distance with respect to the extension lever, in the longitudinal direction thereof. Extension lever 18 and slide 31 are provided at their upper ends with associated forks 32 and 33 respectively, which extend perpendicularly to each other, and which are capable of converging in such a manner that hinge pin 22 can be pivotally accommodated between forks 32 and 33. When slide 31 moves in a direction away from hinge pin 22, fork 33 of slide 31 is moved away so far that hinge pin 22 can be removed from fork 32 of extension lever 18 (see Fig. 7). Slide 31 is operated by means of driving element 21, which is provided with a lateral projection 34, which is capable of engaging a wall 35, which extends vertically in the closed position of panel 4, and of pushing slide 31 forwards with respect to the lever 18, which is detained by auxiliary lever 25 and slide 29. A spring 36, which operates between extension lever 18 and slide 31, ensures that slide 31 will move back to the locked position again.

Figs. 5 - 7 furthermore show that stationary frame 3 is fitted with a vertical guide 37 for a coil spring 38, which is capable of engaging the underside of panel 4 in the closed position thereof, and which loads panel 4 in upward direction. Said spring 38 functions to push panel 4 upwards when said panel 4 is being unlocked from its closed position, so that it can be readily taken hold of and be removed by hand. The upper side of the fork 33 of slide 31 may furthermore be provided with a sloping wall, which enables hinge pin 22 to push slide 31 from its locked position to the unlocked position when hinge pin 22 is pushed into fork 32 of extension lever 18, so that panel 4 can automatically be locked in position again, because slide 31 is automatically moved back to the locked position, thus retaining hinge pin 22, by means of spring 36 after hinge pin 22 has been inserted into fork 32.

During normal use of this open roof construction, driving element 21 will move between the positions which are shown in Figs. 5 and 6, so as to be able to move panel 4 between the closed position and the ventilating position. In order to allow removal of panel 4, driving 21 can be moved further forwards by means of a separate control button or the like, beyond the position associated with the closed position of panel 4, so as to unlock the unlocking mechanism and thus release panel 4.

Since the electric motor for operating the panel 4 is also used for unlocking the unlocking mechanism for panel 4, said unlocking may be electronically controlled, thus making it possible to control in a simple and safe manner when and in what position said unlocking may take place. Sensors may furthermore be provided, which sensors are capable of detecting whether or not panel 4 is present. If said sensors do not deliver a "safe" signal before panel 4 is properly mounted, the drive unit for the panel can only be operated when said panel is present.

From the foregoing it will be apparent that this embodiment is remarkable for its resistance to burglary and for its protection against incorrect operation of the unlocking mechanism. Furthermore, the unlocking mechanism can be operated in a safe and reliable manner.

## Claims

1. An open roof construction for a vehicle having an opening (2) in its fixed roof (1), which construction comprises a stationary part (3) to be secured to the roof of the vehicle, a movable closing element (4) for selectively opening or closing the roof opening, adjusting means (5; 17) provided between said stationary part (3) and said closing element (4), which comprise an operating element (6) for adjusting said closing element, wherein said adjusting means (5; 17) are adjustable within a normal adjusting range between at least a first position, which corresponds with an extreme open position of the closing element (4), and a second position, which corresponds with the closed position of the closing element, as well as an unlocking mechanism (11; 31 - 38), which is preferably provided between said closing element and said adjusting means, for unlocking and removing the closing element, **characterized in that** said adjusting means (5; 17) comprise an unlocked position beyond the normal adjusting range, which is to be selected by the operating element (6), and that the unlocking mechanism (11; 31 - 38) is constructed in such a manner that it can only be activated in the unlocked position of the adjusting means.

2. An open roof construction according to claim 1, wherein said closing element (4) comprises a rigid panel, which is movable between the closed position and a ventilating position, in which it slopes upwards in rearward direction.

3. An open roof construction according to claim 2, wherein said unlocking mechanism (11) is provided with a manually operated unlocking element (14), which is incorporated in the adjusting means (5), and which can preferably not be operated until the adjusting means have been moved beyond said first position.

4. An open roof construction according to claim 3, wherein said adjusting means (5) are provided with a bell-crank lever (8, 9) between a drive shaft (7) and a hinge (10) connected to the panel (4), and wherein said unlocking mechanism (11) is incorporated in said bell-crank lever (8, 9).

5. An open roof construction according to claim 4, wherein the two lever arms (8, 9) of said bell-crank lever are detachably interconnected by means of a manually operated slide (14), which functions as an unlocking element of the unlocking mechanism (11).

6. An open roof construction according to claim 5, wherein said unlocking mechanism (11) is provided, for the purpose of effecting said unlocking, with a pivoted grip (16) engaging the unlocking element (14), which grip can be operated in such a manner as to operate the locking element (14) and separate the parts in question (8, 9) in one movement.

7. An open roof construction according to claims 5 and 6, wherein said pivoted grip (16) pivots along with the respective lever arm (9) when the panel (4) is being operated, and wherein said pivoting takes place in such a manner that the grip (16) is not released for operation until the lever arm (9) of the adjusting means (5) has taken up the unlocked position.

8. An open roof construction according to any one of the preceding claims, wherein the unlocking mechanism (11) is provided with a catch construction and with a spring (15), in such a manner that the separated parts (8, 9) can automatically be returned to the locked position.

9. An open roof construction according to any one of the preceding claims, wherein the operating element (6) for the adjusting means consists of a controllable electric motor.

10. An open roof construction according to claim 1 or 2, wherein said adjusting means (17) can be adjusted by means of an electric motor, which can be controlled by means of control elements, and also be moved to the unlocked position, where the unlocking of the unlocking mechanism (31 - 38) takes place automatically.

11. An open roof construction according to claim 10, wherein the unlocked position of the unlocking mechanism (31 - 38) lies beyond said second (closed) position, and wherein the panel (4) is loaded in upward direction by a spring element (38) in its closed position, in such a manner that the panel (4) is automatically pushed upwards after the unlocking mechanism (31 - 38) has been unlocked.

12. An open roof construction according to claim 10 or 11, wherein said adjusting means (17) comprise at least one extension lever (18) provided between said panel (4) and said driving element (21), which extension lever (18) is fitted with a slide (31) functioning as an unlocking element, which is capable of movement with respect to said extension lever, wherein said extension lever (18) and said slide (31) can lock a pin (22) of panel (4) in position by means of crossed forks (32, 33) and release it again by moving with respect to each other.

13. An open roof construction according to claim 12, wherein the lower end of said extension lever (18) is in driving engagement with the driving element (21) in all positions of the extension lever except the lowermost one, which driving element can come into engagement with the slide (31) in the closed position of the panel (14) so as to operate the unlocking mechanism (31 - 38).

14. An open roof construction for a vehicle having an opening in its fixed roof, which construction comprises a stationary part to be secured to the roof of the vehicle, a movable panel for selectively opening or closing the roof opening, adjusting means provided between said stationary part and said panel, which comprise an electric operating element for adjusting said panel, wherein said adjusting means are adjustable within a normal adjusting range between at least a first position, which corresponds with an extreme open position of the panel outside the roof opening, and a second position, which corresponds with the closed position of the panel, in which said panel closes the roof opening, as well as an unlocking mechanism for unlocking and removing the panel, **characterized in that** said unlocking mechanism is provided with a manually operated unlocking element, which is incorporated in the adjusting means.

15. An open roof construction for a vehicle having an opening in its fixed roof, which construction comprises a stationary part to be secured to the roof of the vehicle, a movable panel for selectively opening or closing the roof opening, adjusting means provided between said stationary part and said panel, which comprise an electric operating element for adjusting said panel, wherein said adjusting means are adjustable within a normal adjusting range between at least a first position, which corresponds with an extreme open position of the panel outside the roof opening, and a second position, which corresponds with the closed position of the panel, in which said panel closes the roof opening, as well as an unlocking mechanism for unlocking and removing the panel, **characterized in that** said locking mechanism is preferably electrically operated with the panel in the closed position, and that the panel is spring-loaded in the direction in which the panel is to be removed.
